Europäisches Patentamt

European Patent Office

Office européen des brevets

(11) Publication number: **0 408 374 A2**

# EUROPEAN PATENT APPLICATION

(21) Application number: 90307661.0

(22) Date of filing: 12.07.90

(51) Int. Cl.⁵: **A23G 9/02**, A23G 3/00, A23G 3/20

A request for addition of formal drawings has been filed pursuant to Rule 88 EPC. A decision on the request will be taken during the proceedings before the Examining Division (Guidelines for Examination in the EPO, A-V, 2.2).

The title of the invention has been amended (Guidelines for Examination in the EPO, A-III, 7.3).

(30) Priority: 12.07.89 NZ 229913
09.10.89 NZ 230943

(43) Date of publication of application:
16.01.91 Bulletin 91/03

(84) Designated Contracting States:
AT DE ES FR GB

(71) Applicant: **Sanders, Ernest Douglas**
**Siefert Road, Tauhei, R D 5**
**Morrinsville(NZ)**

(72) Inventor: **Sanders, Ernest Douglas**
**Siefert Road, Tauhei, R D 5**
**Morrinsville(NZ)**

(74) Representative: **Ablewhite, Alan James**
**MARKS & CLERK 57/60 Lincoln's Inn**
**Fieldslds**
**London WC2A 3LS(GB)**

(54) **Confectionery articles consisting of filled fruits.**

(57) The specification discloses a confectionery article based on fruit or other non-woody vegetable matter. A method is described which includes preparation of the fruit, injection of additives into cavities formed in the flesh and subsequent cooling. Other optional steps and variations are also described. A probe assembly suitable for use with the method of preparation of a confectionery article is also disclosed.

## ASPECTS OF CONFECTIONERY

This invention relates to confectionery articles based on non-woody vegetable matter, or more specifically, to confectionery articles from fruit. Fruit is defined wherever used in the specification as encompassing all edible non-woody plant material, especially the fleshy portion surrounding the seeds of a plant.

The present invention seeks to provide an item of confectionery prepared from fruit, and a method of preparing same.

Further objects and advantages of the present invention will become apparent from the ensuing description which is given by way of example only.

According to one aspect of the present invention there is provided a method of introducing fluid additives into an article of fruit comprising:
- inserting a probe into the flesh of the article;
- creating a cavity in the flesh, said cavity resulting from the withdrawal and/or compression of the flesh;
- introducing through a probe, an additive into said cavity.

According to another aspect of the present invention there is provided a method of producing a confectionery item from an article of fruit, comprising;
- creating at least one cavity within the article by physical interaction;
- through the use of an injection probe, introducing an additive, as herein defined, into at least one cavity which has been formed;
- cooling the article to less than 5°C.

According to yet a further aspect of the present invention there is provided means and apparatus for performing the above methods, and a confectionery article resulting from same.

For simplicity, the invention shall be described in relation to an article of confectionery produced from *kiwifruit* though other fruits and non-woody vegetable matter may also be used. It should be appreciated that certain procedures may need to be modified to allow for different physical characteristics of other fruit.

Preparation of a confectionery article may be according to the following general steps:
- Selection of suitable fruit - check ripeness, firmness, blemishes etc. It may be desirable to monitor juice or moisture content as ice-lolly type embodiments may require a higher juice content;
- (Optional) removal of non-edible material such as seeds, skin etc. (performed by known processing techniques);
- (Optional) shaping, by known processing techniques, of the fruit into a uniform or otherwise desirable shape, size or weight range;
- Creation of at least one cavity in the flesh of the fruit;
- Injection of additives into at least one cavity. In many cases the additive will include at least one of the group of sour, bitter, sweet and salty tasting substances, or substances imparting those qualities. It is also possible that different additives may be injected at different places in the flesh, to vary properties such as taste as various portions of the confection are consumed;
- (Optional) insertion of a handle;
- Cooling the fruit article to less than 5°C;
- (Optional) removal of skin (if present) after cooling;
- (Optional) applying an outer coating of suitable additives.

While the non-optional steps are performed sequentially, the optional steps may be performed in any practicable order or stage.

### EXAMPLE 1

A suitable firm ripe *kiwifruit* is selected. Typically the fruit has been graded to fall within a predetermined range of shapes and sizes and may be chosen to be free of any blemishes.

The central pith and one end cap of the fruit are removed using known techniques.

A probe assembly comprising a plurality of hollow needles is inserted into the flesh. Suction is applied to remove flesh and the probe assembly withdrawn. This forms the cavities into which an additive may be injected. Alternatively, solid probes or needles which create a cavity by compressing the flesh could be used. Any combination of suction and compression devices could also be used.

A separate probe assembly having injection needles is inserted into the cavities thus far formed, or in close proximity thereto. A suitable additive, to be described later, is injected at a pressure exceeding 1 atmosphere while the probe is withdrawn. If desired, the additive may be altered as the needle is withdrawn though this may complicate the additive feed system employed.

At this or a later stage, a suitable handle (for instance, a rod of wood, plastic or other suitable material) is inserted into the fruit. Typically this will be inserted centrally within the fruit though may depend upon the type and configuration of a holding means chosen.

The fruit with injected additives is now cooled. This may be a rapid freezing process to inhibit ice crystal formation, though crystal inhibiting additives already injected may allow a slower cooling process. Typically the fruit is cooled to between -20°C to +5°C.

The skin is removed by rapidly heating the outer region of the article to the extent that the skin and a small layer of flesh underneath is thawed while the remainder of the article remains chilled (to typically less than 0°C, or more preferably, less than -10°C). The softened outer layer with the skin may be readily removed from the firm chilled interior. Means of heating may include hot air, hot water and other fluids, infra-red heaters, microwaves or any other suitable means. In a preferred embodiment, an article chilled to -18°C is immersed in water exceeding 75°C for a period of 3-30 seconds. Some experimentation may be required to determine the best time for various combinations of parameters.

A suitable outer coating may now be applied. Suitable coatings include any additive as herein defined though commonly selected will be substance or substances affecting the flavour, colour, appearance or physical structure of the article. Flavour modifiers may include for example sugars and sweeteners, acidic substances such as citric acid and so on. Appearance modifiers include flakes of chocolate and coloured confectioneries such as those which are often sprinkled on desserts. Structure modifiers include firming agents which may improve the physical integrity of the article - for instance, hard or firm outer layers (which may diffuse into the flesh) such as toffees, caramels, chocolates or gels.

**EXAMPLE 2**

The process is substantially the same as described in Example 1 except for the stage of additive injection.

A single probe assembly is used for cavity formation and injection. Separate cavity forming and injection needles or probes are present on the probe assembly. Cavity formation may take place by compression or withdrawal (including suction) of flesh. Injection may occur simultaneously with or subsequent to cavity formation and need not be at precisely the same location as the formed cavity. Further, cavity formation and additive injection may occur at any stage (or stages) of probe injection or withdrawal.

**EXAMPLE 3**

An article of fruit is selected on the basis of it either (i) showing a resistance to disintegration or the loss of substantial amounts of fluid (such as natural juices or additives) after cooling and during the early stages of thawing, or (ii) having an outer skin resistant to damage from handling or freezing and able to restrict the loss of fluid (such as natural juices or additives). Examples of suitable fruits include *kiwifruit*, citrus fruits, bananas, tree tomato (tamarillo), shelled and unshelled peas and beans; all of which have a resilient durable skin able to help retain the integrity of the article as well as retaining moisture and juices. Examples of fruit showing a resistance to disintegration or major fluid loss include stalk type materials such as rhubarb, root type materials such as carrots, or reconstituted fruit materials.

A probe assembly, such as described above or as later described with reference to the drawings, is used to create cavities and inject the appropriate additives. For skinned type fruit it is often more appropriate to inject additives containing at least a sweetening agent while for stalk and root type materials, an additive including at least a salty tasting substance may be preferred. In some skinned fruit having a soft flesh (for example passionfruit, citrus fruits) the cavity formed through the insertion of only a hollow injection needle may be sufficient - the additive being injected under pressure or as the needle is withdrawn.

The fruit is then cooled and is ready for serving or packaging. There is no skin removal (if present), though this may be performed by the consumer. Fruit of high juice content may be chilled sufficiently to freeze the juice though a thickening or gelling agent may be included in the additives.

ADDITIVES

An additive, for use in the present invention, is defined as being any substance or combination of substances suitable for food use and includes: preservatives, ice crystal formation inhibitors, emulsifiers, binders, texture improvers, food acids, sour tasting substances, colourings, flavourings, salt or salty tasting substances, sweeteners (including natural and artificial), fruit, plant and animal extracts, liqueurs, enzymes or digestive agents, bitter tasting substances, carriers and diluents, agents promoting infusion of various other additives into the fruit, medicinal substances and preparations and other types of modifiers and enhancers.

Typically, an additive used for most embodiments of the present invention will include a sweetened syrup such as that commonly used in canned fruit. If a suction process is used for cavity formation, then the removed fruit pulp may also be incorporated into the additive. Any of the other types of additives may also be added as required. It is also envisaged that different additives and additive blends may be injected into different parts of the fruit.

It is necessary for the additive, when injected through a probe assembly, to be fluid though other techniques or a modified probe assembly may be employed for inserting solid or even gaseous additives and mixtures.

Additives may also be incorporated into the article by an infusion step. Here the required additives are applied to the outside of the fruit (typically after the skin has been removed) in the form of a coating. This may comprise or be additional to any other coating step. In the infusion step, the additives may be gaseous, liquid or solid. It is possible that the article is allowed to remain in contact with the bulk additive for only a predetermined time (eg: immersion for a given period).

A probe assembly suitable for use with the invention will now be described by way of example only with reference to the accompanying diagrams in which:

Figure 1 : is a cross-sectional diagrammatic view of one preferred embodiment of a probe assembly,

Figure 2 : is a perspective side view of the probe assembly of figure 1, and

Figure 3 : is a cross-sectional diagrammatic view of a confectionery article according to the present invention.

A probe assembly for the introduction of an additive into an article of non-woody vegetable matter comprises a body 1 from which extends at least one cavity forming probe 2 and at least one injection probe 3 which is connectable to a source of additive.

In the assembly illustrated, the body 1 comprises two chambers 4, 5 which are bounded by barriers 6, 7, 8 and which are sealed against body 1 by O-rings 9, 10, 11.

The chamber 4 has provision 12 for connection to a vacuum. Six hollow needles 2 represent the cavity forming probes and extend forwardly of the vacuum chamber 4 by approximately 60mm. These needles 2 are distributed in an annular arrangement co-axial to the longitudinal axis of the body 1. Each needle 2 is formed from 4mm to 7mm outside diameter stainless steel tube of wall thickness 0.25mm to 1.5mm. Larger sized internal diameters (for instance, greater than 3mm) are les likely to clog in suction type embodiments. The tube point 13 may be sharpened to aid insertion into a fruit.

Insertion of the hollow needle 2 tends to separate a plug of flesh from the main body of the fruit. Applying a moderate to high vacuum via chamber 4 withdraws this plug of flesh from within the needle 2. The withdrawn flesh may be collected in a trap and either disposed of or recycled in the additive.

In other embodiments of a needle 2, suction may be applied to aid removal of the flesh as the needle is withdrawn. The needle may be subsequently cleared by pressurised air or liquid when clear of the fruit article.

There are six injection needles (probes) 3 extending forwardly of the body 1 by approximately the same distance as needles 2. In the illustrated embodiment they extend by 40mm to 50mm. These six injection needles 3 are distributed in an annular arrangement co-axial to the longitudinal axis of the body 1 and near to the cavity forming needles 2. They are connected to chamber 5 which is in then connected to an additive source able to provide additive under the required pressure. If it is desired, means may be provided to allow additives to be alternated or blended during an injection operation. Other embodiments of a probe assembly may have different injection needles connected to sources of different additives.

Essentially, the cavity forming needles 2 and injection needles 3 are grouped in pairs and in some embodiments are immediately adjacent each other ie: touching. Other embodiments may comprise groups of differing numbers of cavity forming 2 or injection 3 needles. In addition to (or instead of) these groups may be provided variously placed cavity forming 2 or injection 3 needles. For instance, injection needles may be placed in proximity to the cavity already created through removal of the central pith of the fruit.

Each injection needle 3 is typically a fourteen standard wire gauge (14swg) hypodermic tube which may be tapered at its point 14.

To help maintain the needles 2, 3 in place, chamber barriers 7, 8 have apertures therein through which the needles 2, 3 pass. The joins between the apertures and needles are sealed to prevent leakage.

To help prevent damage to the relatively fragile needles, a centre piece 15 extending forwardly of the body 1 by distance greater than any of the needles 2, 3, may be provided. This centre piece 15 is relatively robust in construction and is intended to strike a solid surface before any of the needles 2, 3 and thereby prevent further travel of the probe assembly before damage to the needles 2, 3 can occur. Sensors on the probe insertion apparatus may be provided to detect the occurrence of such a situation and to effect remedial action.

In other embodiments of a probe assembly, the cavity forming 2 and injection 3 needles may be combined into a single needle. If flesh is still to be withdrawn by suction, then valve means to allow alternation between a vacuum or pressurised additive source will need to be included, either in the probe assembly or externally thereto.

In other embodiments, cavity forming needles 2 may be constructed or modified to remove flesh during their withdrawal. For instance, the outer surface may be ribbed or barbed to tear or pull away flesh as the needle 2 is withdrawn. Additive may be injected as the needle 2 is withdrawn so that the needle also acts as an injection needle.

In summary, the probe assembly creates by physical interaction, at least one cavity within the fruit article. This may be by compression, suction or other means of withdrawal of flesh from the fruit and results from the insertion of at least one cavity forming probe into said fruit.

The probe then introduces additive into at least one of the formed cavities. The additive may be pressurised to aid injection, though low pressure embodiments (though the pressure is typically greater than one atmosphere) may be used. Even lower pressures may be used if a vacuum cavity forming probe is also employed - the vacuum can help draw additive from the injection needle. The different types of probes may be grouped or even combined into a signal dual function needle. Several such groups may be distributed about the probe assembly and in addition separate cavity forming or injection needles may be present.

Figure 3 illustrates a confectionery article according to the present invention. The article comprises the body 16 of a single *kiwifruit* into which a plurality of cavities 17 have been formed and into which an additive, such as before described, has been injected. Typically the additive will include at least one of the group of sour, bitter, sweet and salty tasting substances, or substances imparting those qualities. Into the larger central cavity 18, which was formed by the removal of the pith, is inserted a handle 19 which comprises a handle of an edible or non-edible material suitable for use with food. The handle may also be configured into a novel shape other than a rod.

In the embodiment illustrated, the skin has been removed and an outer coating 20 has been applied. This outer coating comprises mainly sweet and granular confectionery material. For effect, these may be primarily green with brown dispersed randomly throughout to simulate the appearance of the flesh of the *kiwifruit*.

Aspects of the present invention have been described by way of example only and it should be appreciated that modifications and additions may be made thereto without departing from the spirit or scope thereof as defined in the appended claims.

## Claims

1. A method of introducing fluid additives into an article of non-woody vegetable matter comprising:

- inserting a probe into the flesh of the article;
- creating a cavity in the flesh, said cavity resulting from the withdrawal or compression of the flesh;
- introducing through a probe, an additive into said cavity.

2. A method as claimed in claim 1 wherein suction is applied via the probe to promote withdrawal of the flesh.

3. A probe assembly for the introduction of an additive into an article of non-woody vegetable matter, comprising a body, from which extend:
- at least one cavity forming probe, and
- at least one injection probe, connectable to a source of additive.

4. A probe assembly as claimed in claim 3 wherein at least one cavity forming probe is connectable to a vacuum source.

5. A probe assembly as claimed in either claim 3 or claim 4 wherein a single probe acting both as a cavity forming probe and an injection probe, may be substituted for any combination of grouping of same.

6. A probe assembly as claimed in any one of claims 3 through 5 which includes at least one additional probe which extends from the body by a distance exceeding that of any cavity forming or injection probe.

7. A method of producing a confectionery item from an article of fruit, comprising:
- by use of a probe, creating at least one cavity within the article;
- through the use of an injection probe, introducing an additive, as herein defined, into at least one cavity which has been formed;
- cooling the article to less than 5° C.

8. A method as claimed in claim 7 wherein a cavity is formed from withdrawal of flesh from the article resulting from suction applied via a cavity forming probe.

9. A method as claimed in either claim 7 or claim 8 which includes an additional step of skin removal, which step is accompanied by thawing or warming of the outer region of the article.

10. A method as claimed in any one of claims 7 through 9 which includes an additional step of applying an outer coating to the article, said coating comprising an additive as herein defined.

11. A confectionery item comprising a body derived from a single fruit and produced according to a method as claimed in any one of claims 7 through 10.

12. A confectionery item comprising a body derived from the flesh of a single fruit into which has been introduced by injection an additive containing at least one of the group of sour, bitter, sweet and salty tasting substances, or substances imparting those qualities, said item having been subjected to a temperature of less than 5° C during its preparation.

13. A confectionery item as claimed in claim 12 wherein an outer coating of an additive, as herein defined, in a liquid or dry form is applied to the article.